# EUROPÄISCHE PATENTSCHRIFT

(11) **EP 0 594 944 B1**
(45) Veröffentlichungstag und Bekanntmachung des Hinweises auf die Patenterteilung: **03.09.1997**
(21) Anmeldenummer: 93109592.1
(22) Anmeldetag: 16.06.1993
(51) Int. Cl.: F16C 9/02, F16F 13/00

(54) **Kolbenarbeits- oder -kraftmaschine**
Piston machine
Machine à pistons

(30) Priorität: 27.10.1992 DE 4236185
(43) Veröffentlichungstag der Anmeldung: 04.05.1994
(73) Patentinhaber: Firma Carl Freudenberg, 69469 Weinheim (DE)
(72) Erfinder: Ullrich, Günter, W-6944 Hemsbach (DE)

(56) Entgegenhaltungen:
- EP-A- 0 056 347
- EP-A- 0 163 844
- EP-A- 0 189 510
- DE-A- 3 234 980
- DE-A- 3 914 250
- US-A- 4 781 156

## Beschreibung

Die Erfindung betrifft eine Kolbenarbeits- oder -kraftmaschine, umfassend zumindest zwei in einer Reihe hintereinanderliegend angeordnete hin- und herbewegbaren Kolben, eine an zumindest zwei Stelle in einer Lagerung drehbeweglich aufgenommene Kurbelwelle und Pleuelstangen, die die Kolben mit der Kurbelwelle verbinden, wobei an der Lagerung ein parallel zu den Kolben und/oder zur Rotationsachse der Kurbelwelle bewegliche Trägheitsmasse mittels eines Federelements festgelegt ist und wobei die Lagerung zumindest zwei Lagerbrücken umfaßt.

Eine solche Kolbenarbeits- oder -kraftmaschine ist aus der US-A-4 781 156 bekannt. Die Trägheitsmasse ist in Form einer Ausgleichswelle ausgebildet, die entgegen der Richtung der Kurbelwelle rotiert. Die Ausgleichswelle ist in einer weiteren Trägheitsmasse gelagert, die ihrerseits durch Schraubendruckfedern aus metallischem Werkstoff in einem Lagerbock gelagert ist. Die Schraubendruckfedern sind vorgesehen, um die Übertragung der Drehbewegung von der Kurbelwelle auf die Ausgleichswelle unter allen Betriebsbedingungen sicherzustellen. Die Aufgabe, die der vorbekannten Dämpfungsvorrichtung zugrundeliegt, wird darin gesehen, ihre Reibung zu minimieren. Diese Vorrichtung zur Dämpfung von Schwingungen weist einen komplizierten Aufbau auf und besteht aus einer Vielzahl von Bauteilen, was in fertigungstechnischer und wirtschaftlicher Hinsicht wenig zufriedenstellend ist.

Aus der DE-A-32 34 980 ist eine Hubkolbenbrennkraftmaschine mit Massen- bzw. Momentausgleich bekannt, wobei der Massen- bzw. Momentausgleich aus schwingbaren Hilfsmassen besteht, die an der Hubkolbenbrennkraftmaschine vorgesehen sind und in Richtung der auszugleichenden Massenkräfte bzw. Massenmomente federnd abgestützt sind.

Die Kolbenarbeits- oder -kraftmaschinen der vorgenannten Art verursachen zu große Lärmemissionen.

Der Erfindung liegt die Aufgabe zugrunde, eine Kolbenarbeits- oder -kraftmaschine der eingangs genannten Art derart weiterzuentwickeln. daß die Tilgerwirkung und die Dämpfungseffekte durch Elastizität und Dämpfung von Federelementen erzielt werden, daß die Schwingungen. die in voneinander abweichenden Richtungen wirksam sind, durch einfache Mittel getilgt/gedämpft werden können und daß sich eine Verminderung der Lärmemission ergibt.

Diese Aufgabe wird erfindungsgemäß bei einer Kolbenarbeits- oder -kraftmaschine der eingangs genannten Art mit den Merkmalen von Anspruch 1 gelöst. Auf vorteilhafte Ausgestaltungen nehmen die Unteransprüche Bezug.

Bei der erfindungsgemäßen Kolbenarbeits- oder -kraftmaschine ist es vorgesehen, daß an jeder Lagerbrücke eine Trägheitsmasse unter Zwischenschaltung eines Federelements festgelegt ist und daß das Federelement aus Gummi besteht. Die durch die hin- und hergehende Kolbenbewegung verursachte Initialerregung der Lagerbrücke läßt sich bereits vermindern, wenn die Trägheitsmasse nur parallel zu dem Kolben beweglich ist. Die Kolbenbewegung verursacht aber Sekundärbewegungen der Kurbelwelle, die sich zumindest parallel zu deren Drehachse erstrecken. Die Trägheitsmasse soll aus diesem Grunde unter Verzicht auf eine starre Führung zusätzlich zumindest parallel zu der Drehachse und vorteilhaft in drei einander senkrecht zugeordneten Richtungen bewegbar mit der Lagerbrücke verbunden sein. Die Lagerbrücke ist in starrer Weise mit dem Maschinengehäuse verbunden. Die Reduzierung der Initialerregung der Lagerbrücke hat dadurch erhebliche Auswirkungen auf das die Lagerbrücke tragende Gehäuse der Kolbenarbeits- oder -kraftmaschine, was dazu führt, daß die Lärmabstrahlung des Gehäuses deutlich reduziert ist.

Im Hinblick auf die Erzielung dieses Effektes bedient sich die Erfindung der Ausnutzung der Tilgerwirkung und von Dämpfungseffekten. Die Elastizität und Dämpfung des Federelementes und die Größe der Trägheitsmasse müssen zur Erzielung optimaler Effekte in bestimmter Weise aufeinander abgestimmt sein. Die dazu erforderlichen Kenntnisse sind dem Schwingungsfachmann bekannt und nicht Gegenstand der vorliegenden Patentanmeldung.

Die Trägheitsmasse sollte zur Erzielung einer guten Wirksamkeit an einer Stelle der Lagerbrücke montiert werden, an der sich während der bestimmungsgemäßen Verwendung besonders große Schwingungsausschläge ergeben. Eine Anbringung etwa in der Mitte der Lagerbrücke wird aus diesem Grunde bevorzugt.

Als besonders einfach und wirkungsvoll hat es sich erwiesen, wenn die Trägheitsmasse auf der von dem Kolben angewandten Seite der Lagerbrücke angeordnet ist. Auch bei bereits vorhandenen Kolbenarbeits- und -kraftmaschinen ist in diesem Bereich häufig ein Freiraum von erheblicher Größe vorhanden. Die erfindungsgemäße Modifizierung der Lagerbrücke erfordert in solchen Fällen keinen großen Aufwand

Während der bestimmungsgemäßen Verwendung können in einer Kolbenarbeits- oder - kraftmaschine Schwingungen auftreten. die in voneinander abweichenden Richtungen wirksam sind. Um alle diese Schwingungen in wirksamer Weise unterdrücken zu können, besteht das Federelement aus Gummi.

Das Federelement kann im einfachsten Falle durch unmittelbares anvulkanisieren an einem Teil der Lagerbrücke festgelegt sein. Die Herstellkosten bewegen sich bei einer solchen Ausführung auf dem absoluten Minimum.

In Fällen, in denen es um die nachträgliche Ausrüstung einer Kolbenarbeits- oder - kraftmaschine geht, hat es sich demgegenüber als vorteilhaft bewährt, wenn die Trägheitsmasse nachträglich und mit handwerklichen Mitteln montierbar ist. Zu diesem Zwecke kann das Federelement auf der von der Trägheitsmasse abgewandten Seite an einer Tragplatte festgelegt sein, wobei die Tragplatte und die Lagerbrücke starr verbindbar sind. beispielsweise durch eine gegenseitige Verschraubung. Die Trägheitsmasse und die Tragplatte können bei einer solchen Ausführung durch das Federelement einstückig verbunden sein. beispielsweise durch unmittelbares Einvulkanisieren in den Spalt zwischen der Trägheitsmasse und der Tragplatte.

Die mit der Erfindung erzielten Vorteile bestehen vor allem darin, daß es die Erfindung erlaubt, die während der bestimmungsgemäßen Verwendung von einer Kolbenarbeits- oder -kraftmaschine ausgehende Lärmemission bei geringem wirtschaftlichen Aufwand deutlich zu vermindern.

Die Erfindung wird nachfolgend anhand der in der Anlage beigefügten Zeichnung weiter verdeutlicht. Diese zeigt eine Kolbenkraftmaschine schematisch und teilweise in quergeschnittener Darstellung, umfassend einen hin- und herbewegbaren Kolben 2, eine an einer Stelle in einer Lagerbrücke 3 drehbeweglich aufgenommene Kurbelwelle 4 und eine Pleuelstange 5, die den Kolben 2 mit der Kurbelwelle 4 verbindet, wobei in der Lagerbrücke 3 eine parallel zu dem Kolben 2 bewegliche Trägheitsmasse 6 mittels eines Federelementes 7 aus Gummi festgelegt ist. Das Federelement 7 ist auf der von der Trägheitsmasse 6 abgewandten Seite mit einer Tragplatte 8 verbunden, welche durch zwei Halteschrauben starr an der Lagerbrücke 3 festgelegt ist. Die Trägheitsmasse 6 ist hinsichtlich ihrer Größe derart mit der Federelastizität und Dämpfung des Federelementes 7 abgestimmt, daß die sich während der bestimmungsgemäßen Verwendung ergebenen Schwingungen der Lagerbrücke eine deutliche Dämpfung erfahren. Die Trägheitsmasse ist unter Verzicht auf eine starre Führung in drei senkrecht aufeinander stehenden Richtungen relativ zu der Lagerbrücke beweglich.

Da in der Kolbenarbeits- oder -kraftmaschine mehrere Kolben in einer Reihe hintereinanderliegend angeordnet und durch Pleuelstangen mit der Kurbelwelle verbunden sind, ist an jeder der vorhandenen Lagerbrücken eine Trägheitsmasse unter Zwischenschaltung eines Federelementes anzubringen.

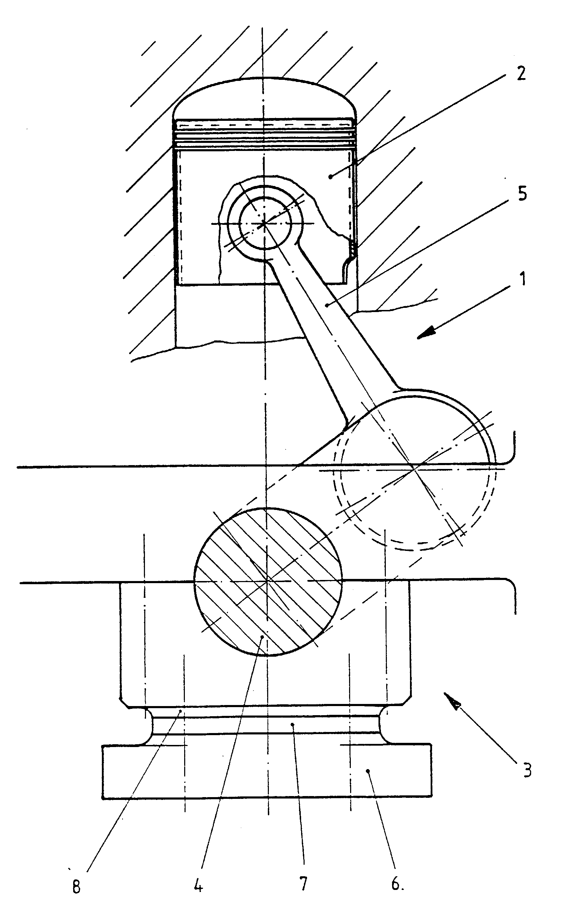

## Patentansprüche

1. Kolbenarbeits- oder -kraftmaschine (1), umfassend zumindest zwei in einer Reihe hintereinanderliegend angeordnete hin- und herbewegbare Kolben (2), eine an zumindest zwei Stellen in einer Lagerung drehbeweglich aufgenommene Kurbelwelle (4) und Pleuelstangen (5), die die Kolben (2) mit der Kurbelwelle (4) verbinden wobei an der Lagerung eine parallel zu den Kolben (2) und/oder zur Rotationsachse der Kurbelwelle (4) bewegliche Trägheitsmasse (6) mittels eines Federelements (7) festgelegt ist und wobei die Lagerung zumindest zwei Lagerbrücken (3) umfaßt, dadurch gekennzeichnet, daß an jeder Lagerbrücke (3) eine Trägheitsmasse (6) unter Zwischenschaltung eines Federelements (7) festgelegt ist und daß das Federelement (7) aus Gummi besteht.

2. Kolbenarbeits- oder -kraftmaschine nach Anspruch 1, dadurch gekennzeichnet, daß die Trägheitsmasse (6) auf der von dem Kolben (2) abgewandten Seite der Lagerbrücke (3) angeordnet ist.

3. Kolbenarbeits- oder -kraftmaschine nach einem der Ansprüche 1 bis 2, dadurch gekennzeichnet, daß das Federelement (7) auf der von der Trägheitsmasse (6) abgewandten Seite in einer Tragplatte (8) festgelegt ist und daß die Tragplatte (8) und die Lagerbrücke (3) starr verbunden sind.

4. Kolbenarbeits- oder -kraftmaschine nach Anspruch 3, dadurch gekennzeichnet, daß die Trägheitsmasse (6) und die Tragplatte (8) durch das Federelement (7) einstückig verbunden sind.

5. Kolbenarbeits- oder -kraftmaschine nach einem der Ansprüche 3 bis 4, dadurch gekennzeichnet, daß die Tragplatte (8) mit der Lagerbrücke (3) verschraubt ist.

6. Verfahren zur Herstellung einer Kolbenarbeits-oder-Kraftmaschine nach einem der Ansprüche 3 bis 4, dadurch gekennzeichnet, daß zur Herstellung der Verbindung von Trägheitsmasse (6) und Tragplatte (8) das Federelement (7) in den Spalt zwischen der Trägheitsmasse (6) und der Tragplatte (8) unmittelbar einvulkanisiert wird.

## Claims

1. A piston or reciprocating engine (1) comprising at least two pistons (2), which can be moved back and forth and are arranged one behind the other in a row, a crankshaft (4) which is held at least at two points in a bearing so as to be movable in a rotary manner, and connecting rods (5) which connect the pistons (2) to the crankshaft (4), an inertia mass (6) which is movable parallel to the pistons (2) and/or to the axis of rotation of the crankshaft (4) being fastened to the bearing by means of a spring element (7), and the bearing comprising at least two bearing brackets (3), characterized in that an inertia mass (6) is fastened to each bearing bracket (3) with an interposed spring element (7), and in that the spring element (7) is made of rubber.

2. A piston or reciprocating engine according to claim 1, characterized in that the inertia mass (6) is arranged on the side of the bearing bracket (3) remote from the piston (2).

3. A piston or reciprocating engine according to any one of claims 1 to 2, characterized in that the spring element (7) is fastened in a supporting plate (8) on the side remote from the inertia mass (6), and in that the supporting plate (8) and the bearing bracket (3) are rigidly connected.

4. A piston or reciprocating engine according to claim 3, characterized in that the inertia mass (6) and the supporting plate (8) are integrally connected by the spring element (7).

5. A piston or reciprocating engine according to any one of claims 3 to 4, characterized in that the supporting plate (8) is screwed to the bearing bracket (3).

6. A method of producing a piston or reciprocating engine according to any one of claims 3 to 4, characterized in that, to produce the connection of the inertia mass (6) and the supporting plate (8), the spring element (7) is vulcanized directly into the gap between the inertia mass (6) and the supporting plate (8).

## Revendications

1. Machine à pistons (1) comprenant au moins deux pistons (2) disposés en ligne à la suite l'un de l'autre et manoeuvrables en va-et-vient, un vilebrequin (4) tenu de manière à pouvoir tourner en au moins deux points dans un dispositif à paliers et des bielles (5) qui relient les pistons (2) au vilebrequin (4), une masse d'inertie (6) mobile étant fixée parallèlement aux pistons (2) et/ou à l'axe de rotation du vilebrequin (4) au dispositif à paliers au moyen d'un élément résilient (7) et le dispositif à paliers comprenant au moins deux consoles de palier (3), caractérisée en ce qu'une masse d'inertie (6) est fixée via un élément résilient (7) à chaque console de palier (3) et en ce que l'élément résilient (7) est en caoutchouc.

2. Machine à pistons selon la revendication 1, caractérisée en ce que la masse d'inertie (6) est disposée du côté de la console de palier (3) opposé au piston (2).

3. Machine à pistons selon l'une quelconque des revendications 1 à 2, caractérisée en ce que l'élément résilient (7) est fixé dans une plaque de charge (8) du côté opposé à la masse d'inertie (6) et en ce que la plaque de charge (8) et la console de palier (3) sont reliées de manière rigide.

4. Machine à pistons selon la revendication 3, caractérisée en ce que la masse d'inertie (6) et la plaque de charge (8) sont reliées en une pièce par l'élément résilient (7).

5. Machine à pistons selon l'une quelconque des revendications 3 à 4, caractérisée en ce que la plaque de charge (8) est vissée à la console de palier (3).

6. Procédé de fabrication d'une machine à pistons selon l'une quelconque des revendications 3 à 4, caractérisé en ce que, pour réaliser la liaison entre la masse d'inertie (6) et la plaque de charge (8), l'élément résilient (7) est vulcanisé directement dans la fente entre la masse d'inertie (6) et la plaque de charge (8).
